# EUROPÄISCHE PATENTANMELDUNG

(11) **EP 1 020 226 A1**
(43) Veröffentlichungstag der Anmeldung: **19.07.2000**
(21) Anmeldenummer: 99630006.7
(22) Anmeldetag: 04.01.1999
(51) Int. Cl.: B03B 9/06

(54) **Verfahren und Vorrichtung zur Abtrennung von Batterien, Knopfzellen und Metallteilen aus Abfällen**

(71) Anmelder: R.S.T. Luxembourg S.A., 1930 Luxemburg (LU)
(72) Erfinder: Schmidt, Hans, 38704 Liebenburg (DE)
(74) Vertreter: Weydert, Robert

(57) **Zusammenfassung**

Die Abtrennung von Batterien und Knopfzellen mit Fe-Metall- und Kunststoffmänteln und Metallteilen aus Abfällen erfolgt durch kaskadenartig angeordnete Siebschritte (3,6) und selektive Trennschritte in groben und feinen Siebfraktionen mit Fe-Metallabscheidern (2,4,7) und NE-Metallabscheidern (5,8).

## Beschreibung

Die vorliegende Erfindung betrifft ein Verfahren zur Abtrennung von Batterien, Knopfzellen und Metallteilen aus Abfällen und eine Vorrichtung zur Durchführung des Verfahrens.

Batterien und Knopfzellen stellen in Abfällen, die zu Wiederverwertungszwecken aufbereitet werden sollen, aufgrund ihres hohen Schadstoffpotentials, kritische Problemstoffe dar.

Bei den bekannten Abfallaufbereitungsverfahren besteht die einzige Möglichkeit der Erfassung von Batterien und Knopfzellen darin, daß nach den Vorzerkleinerungsschritten Batterien und Knopfzellen mit Fe-Mantel von den nachfolgenden Fe-Abscheidern erfaßt werden.

Verfahren dieser Art sind beispielsweise beschrieben in
DE - PS 31 05 597
FP - PS 02 43 747 B
US - PS 4, 623,515
US - PS 4, 815, 668

Die bekannten Verfahren sind mit dem Nachteil behaftet, daß einerseits bei der Erfassung der Batterien und Knopfzellen nach der Vorzerkleinerung ein Teil der Batterien und Knopfzellen beim Zerkleinerungsvorgang zerstört wird und die Schadstoffe wie Quecksilber, Cadmium und ähnliche Stoffe, freigesetzt werden und andererseits Batterien und Knopfzellen mit Kunststoffmantel nicht auf die Fe-Metallabscheider reagieren, also im Materialstrom verbleiben und der Zerstörung durch weitere Zerkleinerungsaggregate ausgesetzt sind.

Der Erfindung liegt die Aufgabe zugrunde, Batterien und Knopfzellen mit Fe-Metallmänteln und Kunststoffmänteln aus aufzubereitenden Abfällen vor dem ersten zerstörungsgefährdenden Zerkleinerungsschritt der Abfälle abzutrennen.

Die Aufgabe wird erfindungsgemäß dadurch gelöst, daß die Abfälle vor der ersten Zerkleinerungsstufe in einer kaskadenartigen Hintereinanderreihung von Siebschritten, Fe-Metallabscheidern und Ne-Metallabscheidern nacheinander zuerst die größeren Batterien und Knopfzellen aus einer mittelgroben Siebfraktion von ca.< 60mm mit Fe-Metall- und Kunststoffmantel abgetrennt werden und danach die kleinen Batterien und Knopfzellen aus einer feineren Siebfraktion von ca.< 20mm mit Fe-Metall- und Kunststoffmantel abgetrennt werden.

Die Erfindung wird an einem AusfUhrungsbeispiel durch die nachstehenden AusfUhrungen in Verbindung mit der Fließschema-Zeichnung näher erläutert.

Die Abfälle (1) werden zur Erzielung einer störungsfreien Siebung (3) zunächst einer Fe-Metallabscheidung unterzogen, wobei grobe Fe-Metalle (12) abgetrennt werden.

Die verbleibenden Abfälle werden einer ersten Siebung (3) mit einer Maschen- oder Lochweite von ca.60mm unterzogen, wobei die Grobfraktion (13) abgetrennt wird. Der Siebdurchgang < ca.60mm, der alle Batterien und Knopfzellen enthält, wird einer Fe-Metallabscheidung (4) unterzogen, in der zunächst die Fe-Metallteile (14), also auch die größeren und mittelgroßen Batterien (14) und Knopfzellen (14) mit Fe-Metallmantel erfaßt und abgetrennt werden.

Daran anschließend wird das verbleibende Material einer NE-Metallabscheidung (5) unterzogen, in der die NE-Metallteile (15), also auch die größeren und mittelgroßen Batterien (15) und Knopfzellen (15) mit Kunststoffmantel aufgrund ihrer NE-Metallfüllung erfaßt und abgetrennt werden.

Das verbleibende Material wird einer weiteren, nun feineren Siebung (6) mit einer Maschen- oder Lochweite von < ca.20mm unterzogen, wobei der Siebüberlauf als Mittelfraktion (16) abgetrennt wird. Der Siebdurchgang < ca.20mm, der aufgrund der für kleine Knopfzellen schlechten partikularen Verfügbarkeit beim vorbeschriebenen ersten, noch relativ groben Abtrennvorgang noch kleinere Knopfzellen enthält, wird einer weiteren Fe-Metallabscheidung (7) unterzogen, in der zunächst die restlichen Fe-Metallteile (17), also auch die kleineren Knopfzellen (17) mit Fe-Metallmantel erfaßt und abgetrennt werden.

Daran anschließend wird das verbleibende Material einer weiteren NE-Metallabscheidung (8) unterzogen, in der die restlichen NE-Metallteile (18), also auch die kleineren Knopfzellen (18) mit Kunststoffmantel, aufgrund ihrer NE-Metallfüllung erfaßt und abgetrennt werden.

Das verbleibende Material, die Feinfraktion (9) < ca.20mm, die Mittelfraktion (16) und die Grobfraktion (13) sind nach diesen Trennschritten frei von Batterien und Knopfzellen mit Fe-Metall- und Kunststoffmänteln sowie frei von Fe-Metallen und NE-Metallen und können nachfolgend entweder getrennt oder als Mischfraktion (10) einer Weiterverarbeitung (11) zugeführt werden.

Die mit der Erfindung erzielten Vorteile bestehen insbesondere darin, daß durch die selektiven Trennschritte sowohl in groben und feinen als auch im Fe-Metall- und NE-Metallbereich die Erfassung und Abtrennung so gut wie aller Batterien und Knopfzellen gelingt und außerdem gleichzeitig alle Fe-Metalle und NE-Metalle abgetrennt werden.

Weiterhin ist es vorteilhaft, daß die Anordnung der erfindungsgemäßen Abtrennung vor jeglicher Zerkleinerung die Gefahr von Zerstörungen der Batterien und Knopfzellen und damit die Freisetzung von kritischen Schadstoffen in den Abfall verhindert wird.

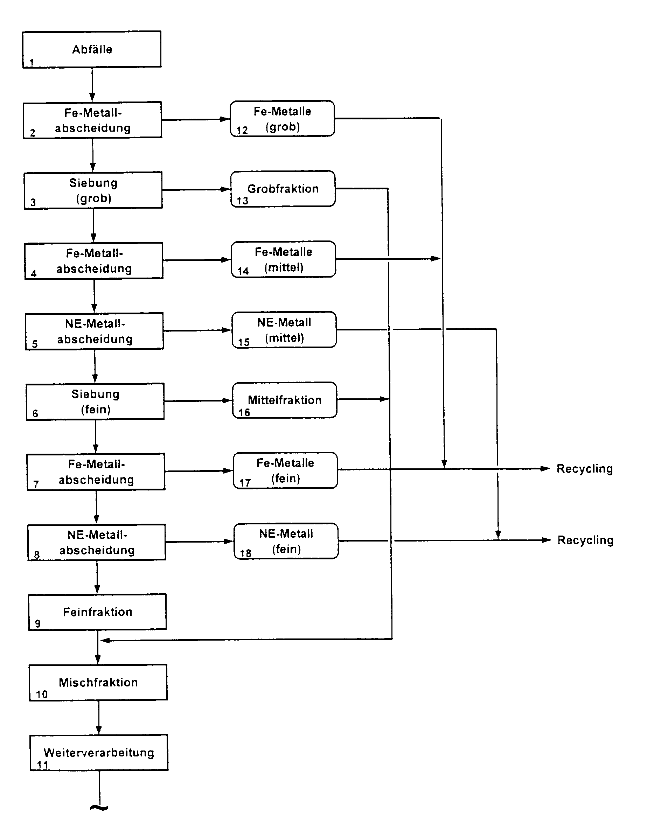

## Patentansprüche

1. Verfahren zur Abtrennung von Batterien, Knopfzellen und Metallteilen aus Abfällen mit einer Vorabscheidung grober Fe-Metallteile und sequentieller Abfolge einzelner Verfahrensschritte, dadurch gekennzeichnet, daß die Abfälle durch hintereinander angeordnete Siebungen zuerst eine Siebfraktion von 0 bis ca. 60 mm Körnung erzeugt wird, aus der selektiv mit Fe-Metallabscheidern größere Fe-Metallteile, also auch Batterien und Knopfzellen mit Fe-Mantel und mit NE-Metallabscheidern NE-Metallteile, also auch Batterien und Knopfzellen mit Kunststoffmantel abgetrennt werden und danach aus dem verbleibenden Material durch weitere Siebung eine Siebfraktion von 0 bis ca.20mm erzeugt wird, aus der ebenfalls selektiv mittels Fe-Metallabscheidern Fe-Metallteile, also auch kleinere Knopfzellen mit Fe-Metallmantel und mit NE-Metallabscheidern kleinere NE-Metallteile, also auch Knopfzellen mit Kunststoffmantel abgetrennt werden.

2. Verfahren nach Anspruch 1, dadurch gekennzeichnet, daß die Siebungs- und Trennstufenkombination in Zweifach- oder Mehrfach-Anordnung erfolgt.

3. Vorrichtung zur Durchführung des Verfahrens nach Ansprüchen 1 oder 2, dadurch gekennzeichnet, daß die Fe-Metallabscheider als Überbandmagneten und/oder als 8andtrommelmagneten und/oder als Magneten im freien Fall des Materialstroms angeordnet sind.

4. Vorrichtung zur Durchführung des Verfahrens nach Ansprüchen 1 oder 2, dadurch gekennzeichnet, daß die NE-Metallabscheider über einem Transportelement des Materialstromes und/oder im freien Fall des Materialstromes angeordnet sind.
